# EUROPÄISCHE PATENTANMELDUNG

(11) **EP 1 151 965 A2**
(43) Veröffentlichungstag der Anmeldung: **07.11.2001**
(21) Anmeldenummer: 01109561.9
(22) Anmeldetag: 18.04.2001
(51) Int. Cl.: C01F 7/66, C02F 1/52

(54) **Verfahren zur Herstellung von Polyaluminiumnitraten und deren Verwendung bei der Wasseraufbereitung**

(30) Priorität: 02.05.2000 DE 10021023
(71) Anmelder: Sachtleben Chemie GmbH, 47198 Duisburg (DE)
(72) Erfinder: Vollmuth, Stefan, Dr., 47803 Krefeld (DE); Vukovic, Ante, 47475 Kamp-Lintfort (DE)
(74) Vertreter: Scherzberg, Andreas, Dr.

(57) **Zusammenfassung**

Beschrieben werden ein Verfahren zur Herstellung von Polyaluminiumnitraten [Al(OH)ₓ(NO₃)_{y}]ₙ, x+y=3, enthaltend 2,5 bis 11,0 Gew.-% Aluminium und 5,0 bis 44,0 Gew.-% Nitrat, bei dem eine Aluminiumverbindung bei einem Druck von mindestens 1,5 bar und Temperaturen von 80 bis 300 °C in einer unterstöchiometrischen Menge Salpetersäure gelöst wird und die Verwendung dieser Polyaluminiumnitrate als Flockungsmittel zur Wasserbehandlung.

## Beschreibung

Die Erfindung betrifft ein Verfahren zur Herstellung von Polyaluminiumnitraten und deren Verwendung bei der Wasseraufbereitung.

In der Wasseraufbereitung werden üblicherweise in Abhängigkeit von der Art der Verschmutzung Aluminiumverbindungen (z.B. Aluminiumchlorid, Aluminiumsulfat, Aluminiumhydroxidchloride), Eisenverbindungen (z.B. Eisensulfat, Eisenchloride), sowie kationische, anionische und nichtionische Polyelektrolyte (z.B. Polyacrylamid, Polyamin, Polyvinylamide, Poly-Dialkyldimethylammoniumchlorid und Schichtsilikate, wie Bentonit) als Flockungs- und Koagulierungsmittel eingesetzt.

Neben diesen traditionell verwendeten Produkten werden seit einigen Jahren zunehmend Aluminiumhydroxidchloride als Flockungsmittel verwendet, insbesondere für anspruchsvolle Aufgaben, z.B. im Trinkwasserbereich. Aluminiumhydroxidchloride sind als Polyaluminiumchloride (PAC) bekannt und durch die Formel [Al(OH)ₓ Cl_{y}]ₙ, x+y=3 charakterisiert. Dabei ist n die einem Polymerisationsgrad vergleichbare Zahl an Aluminiumionen in dem Aluminiumkomplex. Polymere Aluminiumhydroxidchloride eignen sich besser zur Flockung und Koagulation als einfache Aluminiumsalze, wodurch erforderliche Dosiermengen verringert werden können. Anwendererfahrungen bezeugen eine verbesserte Trübstoffaggregation, so dass teilweise auf die Zugabe von Flockungshilfsmitteln verzichtet werden kann. Der Einsatz von Polyaluminiumchloriden bewirkt außerdem eine geringere Absenkung des pH-Wertes, zudem ist der Eintrag an Anionen in das Wasser geringer als bei Verwendung von Neutralsalzen. Schließlich ist die bessere Wirksamkeit von Polyaluminiumchloriden bei niedrigen Wassertemperaturen zu nennen, für den Winterbetrieb ein nicht zu unterschätzender Vorteil.

In der Papierindustrie werden Polyaluminiumchloride (PAC) zur Störstofffixierung, Leimung, Retention, Entwässerung, Stärkefixierung und Abwasseroptimierung eingesetzt. Der Vorteil von Polyaluminiumchloriden gegenüber Aluminiumsulfat liegt in einer geringeren Systemaufsalzung, einer geringeren pH-Wert-Absenkung, einer besseren Fixierung von Stör-, Fein- und Hilfsstoffen und der ungleich geringeren Kreideauflösung bei Neutralfahrweise.

Durch die zunehmende Umstellung auf geschlossene Wasserkreisläufe in der Industrie treten bei Verwendung chloridhaltiger Prozesschemikalien wie Polyaluminiumchloride in diesen Systemen hohe Chlorid-Konzentrationen von bis zu 3000 mg/l auf. Diese Chlorid-Konzentrationen können zu erheblichen Korrosionserscheinungen an den Anlagenteilen führen.

Es ist die Aufgabe der vorliegenden Erfindung ein Flockungsmittel zur Wasserbehandlung bereitzustellen, mit dem die vorstehend angegebenen Nachteile vermieden werden, das kompakte, stabile, durch Flotation oder Sedimentation problemlos vom Wasser abtrennbare Flocken bildet, und das in der Papierindustrie zur Störstofffixierung, Leimung, Retention, Entwässerung, Stärkefixierung geeignet ist.

Die Lösung dieser Aufgabe erfolgt durch ein Verfahren zur Herstellung von Polyaluminiumnitraten [Al(OH)ₓ(NO₃)_{y}]ₙ, x+y=3, abgekürzt auch PAN, die 2,5 bis 11,0 Gew.-% Aluminium und 5,0 bis 44,0 Gew.-% Nitrat enthalten, und die Verwendung dieser PAN als Flockungsmittel zur Wasserbehandlung, insbesondere als Flockungsmittel in der Papierindustrie.

Die Polyaluminiumnitrate (PAN) haben den Vorteil, keinerlei ungewünschtes Chlorid zu enthalten und im Vergleich zu Polyaluminiumchloriden bei der Verwendung als Flockungsmittel nicht signifikant schlechtere Eigenschaften aufzuweisen. Zwar sind die Eigenschaften der PAN hinsichtlich Flockenausbildung, Flockengröße, Sedimentationszeit, Verringerung der Trübung, Entwässerungszeit, Retention, Störstofffixierung und Leimung herkömmlichen Polyaluminiumchloriden unterlegen, vor dem Hintergrund einer Freiheit von ungewünschtem Chlorid aber immer noch ausreichend.

Die beschriebenen PAN können bei der Verwendung als Flockungsmittel mit üblichen Flockungshilfsmitteln, wie Polyelektrolyten (z.B. Polyacrylamide, Polyamine, Polyvinyalamide, Poly-Dialkyldimethyl-ammoniumchlorid), gemischt werden. Das Mischungsverhältnis (in Gew.-%) PAN zu Hilfsmittel kann dabei 99 : 1 bis 1 : 2 betragen.

Zur Herstellung von PAN wird eine Aluminiumverbindung (z.B. Aluminiumhydroxid, Bauxit, Kaolin, aluminiumhaltige Filterschlämme) bei einem Druck von mindestens 1,5 bar und bei Temperaturen von 80 bis 300 °C in einer unterstöchiometrischen Menge Salpetersäure gelöst, deren Konzentration bevorzugt mindestens 30 % beträgt. Unterstöchiometrisch bedeutet, dass weniger Salpetersäure eingesetzt wird, als zur vollständigen Umsetzung der eingesetzten Al-Verbindung zu Al(NO₃)₃ benötigt würde. Dadurch werden im Edukt vorhandene OH-lonen genutzt und das ansonsten notwendige nachträgliche Einbringen von OH-lonen wird eingespart. Dies wiederum bedeutet eine Einsparung von Salpetersäure und vereinfacht die Reaktionsführung. Bevorzugt beträgt das Molverhältnis Al zu HNO₃ 0,6 : 1 bis 1,6 : 1, besonders bevorzugt 0,8 : 1 bis 1,2 : 1.

Der Druck beträgt bevorzugt 2 bis 5 bar, die Temperatur beträgt bevorzugt 100 bis 200 °C. Die besonders bevorzugte Mindestkonzentration der Salpetersäure beträgt 60 %, optimal ist eine Konzentration von 64 bis 65 %.

Die Erfindung wird im folgenden anhand von Beispielen näher erläutert.

### Beispiel 1: Herstellung eines Polyaluminiumnitrates

482 g Aluminiumhydroxid wurden in 693 g Salpetersäure (65 %) und 163 g Wasser in einem Druckreaktor bei 2 bar unter Rühren bei einer Heiztemperatur von 150 °C innerhalb 30 Minuten aufgeschlossen. Die unlöslichen Bestandteile wurden abgetrennt. Das Konzentrat (1060 g) wurde mit 300 g Wasser verdünnt. Das Produkt enthielt 5,8 Gew.-% Al³⁺ und 31,4 Gew.-% NO₃⁻.

### Beispiel 2: Herstellung eines Flockungsmittels aus PAN und einem Flockungshilfsmittel

PAN aus Beispiel 1 wurde mit einem flüssigen, stark kationischen Polyelektrolyten auf Basis eines Polyacrylamids (Dichte 1,03 g/ml, Viskosität 3000 mPa·s) im Gewichtsverhältnis 9 : 1 gemischt. Das erhaltene Flockungsmittel hatte folgende Zusammensetzung: Al³⁺ 5,22 %, NO₃⁻ 28,3 %, Polyelektrolyt 1,2 %.

### Beispiel 3: Vergleich des Flockungsverhaltens verschiedener erfindungsgemäßer und nichterfindungsgemäßer Flockungsmittel

PAN aus Beispiel 1, das Flockungsmittel aus Beispiel 2 und zum Vergleich ein Polyaluminiumchlorid (hergestellt nach DE 1907359) wurden auf ihr Flockungsverhalten hin untersucht. Hierzu wurde ein Standard-Jar-Test mit einem mit 100 ppm Pulveraktivkohle künstlich verschmutztem Wasser verwendet. Die dosierte Aluminiumkonzentration betrug jeweils 5,3 ppm.

Die Ergebnisse sind in Tabelle 1 dargestellt.

**Tabelle 1**

| | **Beispiel 1** | **Beispiel 2** | **PAC (DE 1907359)** |
|---|---|---|---|
| Flockenausbildung | Mäßig | Gut | Sehr gut |
| Flockengröße [mm] | 0,5-1,0 | 1,5-3,0 | 1,5-3,0 |
| t_{sed}.[min] | 2,5 | 1,0 | 1,0 |
| Trübung vorher [NTU] | 8,6 | 8,6 | 8,6 |
| Trübung nachher [NTU] | 1,28 | 0,58 | 0,61 |

Aus Tabelle 1 ist ersichtlich, dass reine PAN (aus Beispiel 1) in ihrem Flockungsverhalten den PAC unterlegen sind, mit Flockungshilfsmitteln modifizierte PAN (aus Beispiel 2) jedoch nahezu an die PAC heranreichen. Vor dem Hintergrund der Chloridfreiheit der erfindungsgemäßen Beispiele gegenüber PAC sind geringfügige Nachteile im Flockungsverhalten sicherlich dort in Kauf zu nehmen, wo es auf eine deutliche Reduzierung des Chloridgehaltes ankommt.

### Beispiel 4: Vergleich verschiedener erfindungsgemäßer und nichterfindungsgemäßer Flockungsmittel im Papierprozess

In diesem Beispiel wurden die Produkte aus den Beispielen 1 und 2 im Papierprozess mit einem herkömmlichen Polyaluminiumchloridsulfat (hergestellt nach DE 1907359)) in ihrem Entwässerungsverhalten, bei der Störstofffixierung und der Leimung verglichen. Die Entwässerungsversuche wurden auf einem Schopper-Riegler-Gerät (beschrieben im Merkblatt V/7/61 des Vereins der Zellstoff- und Papier-Chemiker und -Ingenieure) durchgeführt. Gemessen wurde die Entwässerungszeit einer Standardpulpe (70 % Zellstoff, 30 % Altpapier). Die Resttrübung des Filtrats und der CSB geben Aufschluss über die Retention und Störstofffixierung der Produkte. Die Leimung wurde an einem Standardpapiersystem (2,4 g otro Zellstoff, Prüfblätter: 80g/m², 20 % CaCO₃) mit unterschiedlichen Leimkonzentrationen über den Cobb₆₀-Wert (DIN 53132) getestet.

Die Ergebnisse sind in Tabelle 2 dargestellt.

**Tabelle 2**

| | **Null-Probe** | **Beispiel 1** | **Beispiel 2** | **PAC (DE 1907359)** |
|---|---|---|---|---|
| Entwässerungszeit für 500 ml [min] (1 % atro) | 66 | 52 | 46 | 44 |
| Trübung des Filtrats [NTU] (1 % atro) | 128 | 84 | 65 | 62 |
| CSB [mg/l] (1 % atro) | 77 | 67 | 61 | 62 |
| Leimung Cobb₆₀ | | | | |
| PAC/Leim [% atro] | | | | |
| 2,5 | - | 52 | 55 | 50 |
| 3,0 | - | 27 | 32 | 22 |
| 3,5 | - | 23 | 28 | 21 |
| 4,0 | - | 23 | 23 | 20 |

Tabelle 2 zeigt, dass reine PAN (aus Beispiel 1) ein etwas schwächeres Entwässerungs-, Retentions- und Störstofffixierungsverhalten besitzen als herkömmliche PAC. Das Leimungsverhalten entspricht dagegen dem der PAC. Die Eigenschaften der modifizierten PAN (aus Beispiel 2) reichen insgesamt sehr gut an die Eigenschaften herkömmlicher PAC heran.

## Patentansprüche

1. Verfahren zur Herstellung von Polyaluminiumnitraten [Al(OH)ₓ(NO₃)_{y}]ₙ, x+y=3, enthaltend 2,5 bis 11,0 Gew.-% Aluminium und 5,0 bis 44,0 Gew.-% Nitrat, **dadurch gekennzeichnet, dass** eine Aluminiumverbindung bei einem Druck von mindestens 1,5 bar und Temperaturen von 80 bis 300 °C in einer unterstöchiometrischen Menge Salpetersäure gelöst wird.

2. Verfahren nach Anspruch 1, **dadurch gekennzeichnet, dass** das Molverhältnis Al zu HNO₃ 0,6 : 1 bis 1,6 : 1 beträgt.

3. Verfahren nach Anspruch 1 oder 2, **dadurch gekennzeichnet, dass** das Molverhältnis Al zu HNO₃ 0,8 : 1 bis 1,2 : 1 beträgt.

4. Verfahren nach einem der Ansprüche 1 bis 3, **dadurch gekennzeichnet, dass** die Konzentration der Salpetersäure mindestens 30 % beträgt.

5. Verfahren nach einem der Ansprüche 1 bis 4, **dadurch gekennzeichnet, dass** der Druck 2 bis 5 bar beträgt.

6. Verfahren nach einem der Ansprüche 1 bis 5, **dadurch gekennzeichnet, dass** die Temperatur 100 bis 200 °C beträgt.

7. Verwendung von Polyaluminiumnitraten [Al(OH)ₓ(NO₃)_{y}]ₙ, x+y=3, hergestellt nach einem Verfahren gemäß einem der Ansprüche 1 bis 6, als Flockungsmittel zur Wasserbehandlung.

8. Verwendung nach Anspruch 7, **dadurch gekennzeichnet, dass** das Flockungsmittel zur Wasserbehandlung in der Papierindustrie eingesetzt wird.
